# EUROPEAN PATENT SPECIFICATION

(11) **EP 3 168 330 B1**
(45) Date of publication and mention of the grant of the patent: **03.07.2019**
(21) Application number: 15818541.3
(22) Date of filing: 10.07.2015
(51) Int. Cl.: C25B 15/02, C25B 1/04, C25B 9/00, C25B 9/18, C25B 15/08, C01B 3/22, C01B 3/00

(54) **APPARATUS AND METHOD FOR HYDROGEN PRODUCTION USING HIGH-TEMPERATURE WATER VAPOR ELECTROLYSIS**
VORRICHTUNG UND VERFAHREN ZUR WASSERSTOFFPRODUKTION MIT HOCHTEMPERATUR-WASSERDAMPFELEKTROLYSE
DISPOSITIF ET PROCÉDÉ DE FABRICATION D'HYDROGÈNE METTANT EN UVRE UNE ÉLECTROLYSE DE VAPEUR D'EAU À HAUTE TEMPÉRATURE

(30) Priority: 11.07.2014 JP 2014143527
(43) Date of publication of application: 17.05.2017
(73) Proprietor: Kabushiki Kaisha Toshiba, Minato-ku Tokyo 105-8001 (JP)
(72) Inventor: YAMADA, Kazuya, Minato-ku Tokyo 105-8001 (JP); OOMURA, Hisao, Minato-ku Tokyo 105-8001 (JP); MAKINO, Shinichi, Minato-ku Tokyo 105-8001 (JP); WATANABE, Hisao, Minato-ku Tokyo 105-8001 (JP); FUJIWARA, Seiji, Minato-ku Tokyo 105-8001 (JP); YAMADA, Masahiko, Minato-ku Tokyo 105-8001 (JP); KASAI, Shigeo, Yokohama-shi Kanagawa-Ken 235-0032 (JP)
(74) Representative: Moreland, David
(86) International application number: PCT/JP2015/069922
(87) International publication number: WO 2016/006692

(56) References cited:
- WO-A1-2012/147157
- WO-A2-2013/124632
- JP-A- 2005 126 792
- JP-A- 2009 221 057
- JP-A- 2010 280 975
- JP-A- 2013 199 675
- JP-A- 2015 113 240
- US-A1- 2007 119 718
- US-A1- 2014 079 593

## Description

### Technical Field

An embodiment of the present invention relates to a hydrogen production technique by using high temperature steam electrolysis.

### Background

Realization of a hydrogen energy society using hydrogen as an energy medium has been attracting attention. As one of the technologies for manufacturing hydrogen, a high temperature steam electrolytic method is widely known. This high temperature steam electrolytic method is a method for generating hydrogen and oxygen by electrolyzing steam at a high temperature (normally, 500°C or more).

This method has a merit that an electricity amount required for electrolysis can be reduced by electrolyzing steam under a high temperature environment as compared with electrolysis of water. By means of this property, the same manufactured amount of hydrogen can be obtained with less electric power than that for electrolysis of water at room temperature by approximately 30% and thus, hydrogen can be manufactured with high energy efficiency.

Moreover, since the raw material is water, hydrogen can be manufactured without discharging any carbon dioxide if electricity by renewable energy not generating carbon dioxide and a heat source not generating carbon dioxide are used.

As a method for temporarily storing manufactured hydrogen, three methods are known, that is, (1) hydrogen is compressed to a high-pressure hydrogen gas; (2) hydrogen is made into liquid hydrogen; and (3) hydrogen is occluded by a hydrogen storage material. Among them, the hydrogen storage material generates heat when it occludes hydrogen and absorbs heat when it emits hydrogen in general. Thus, a method of occluding hydrogen by a hydrogen storage material is a hydrogen storage method suitable for combination with hydrogen manufacture by high temperature steam electrolysis in which heat energy greatly contributes to hydrogen manufacture.

Various hydrogen manufacturing techniques using high temperature steam electrolysis have been examined, and Patent Document 1, for example, discloses a technique for improving energy efficiency of hydrogen manufacture by high temperature steam electrolysis by using heat generated when the hydrogen storage material occludes hydrogen for manufacture of steam which is the raw material of the high temperature steam electrolysis.

Though not relating to high temperature steam electrolysis, when water is electrolyzed by using power generated by renewable energy, a technique for manufacturing hydrogen by electrolysis in accordance with fluctuating power supply electricity is in examination. Patent Document 2, for example, discloses a technique of connecting a plurality of electrolysis cells in series or in parallel and of selecting a number of electrolysis cells to be connected in accordance with power supply electricity, and Patent Document 3 discloses a technique of adjusting a flow rate of water to be supplied to an electrolysis device.

### Citation List

### Patent Literature

[Patent Literature 1] Japanese Patent laid-Open No. 2013-199675
[Patent Literature 2] Japanese Patent laid-Open No. 2005-126792
[Patent Literature 3] Japanese Patent laid-Open No. 2010-280975
[Patent Literature 4] PCT Published Application No. WO 2013/124632
describes methods and systems of converting electrical energy to chemical energy and optionally reconverting it to produce electricity as required. The source of electrical energy is at least partially from renewable source. The disclosure allows for convenient energy conversion and generation without the atmospheric release of CO2.

### Summary of Invention

### Problems to be Solved by the Invention

When hydrogen is to be manufactured by high temperature steam electrolysis using power generated by renewable energy as a power supply, a measure against fluctuation of electric power supplied to electrolysis cells is required.

One of the measures can be a method of preparing another electric storage device, of storing an increase portion of electric power when power is increased, and of discharging it from the electric storage device for compensation when the electric power is reduced. However, in order to efficiently manufacture hydrogen by using renewable energy, operation of hydrogen manufacture is preferably controlled stably without using an attached facility such as the electric storage device.

Moreover, if reaction heat (heat generation) when manufactured hydrogen is to be occluded by a hydrogen storage material is used for manufacture of steam which is the raw material of high temperature steam electrolysis, if a hydrogen amount manufactured by the high temperature steam electrolysis is fluctuated, a ratio between hydrogen and the storage material is changed. Thus, it affects a reaction rate or a selection rate, and the reaction heat is fluctuated. Thus, even if a hydrogen flow rate is fluctuated by fluctuation of generated power, stable operation is in demand while the ratio between hydrogen and the storage material is maintained.

The present invention was made in view of such circumstances and has an object of providing a hydrogen production technique by using high temperature steam electrolysis capable of realization of high hydrogen manufacture efficiency and stable operation control even if electric power supplied to an electrolysis cell is fluctuated.

### Means for Solving the Problems

A hydrogen production system according to Claim 1 is provided according to an embodiment. A hydrogen production system using high temperature steam electrolysis of an example includes a plurality of electrolysis cells provided inside a reaction vessel and performing high temperature steam electrolysis by receiving an input of steam generated in a steam generator, a water separator for receiving an input of a mixture of the steam and hydrogen generated by the high temperature steam electrolysis outputted from the electrolysis cell and separating it to the steam and the hydrogen, a hydrogenation reactor for receiving an input of a mixture of a supplied hydrogen storage material and the separated hydrogen and hydrogenating the hydrogen storage material, a heat medium loop for transmitting heat energy generated when the hydrogen storage material is hydrogenated to water to be supplied into the steam generator through a circulating heat medium, a gas/liquid separator for receiving an input of a mixture of the hydrogen storage material after hydrogenation and the hydrogen outputted from the hydrogenation reactor and separating it to the hydrogen storage material after hydrogenation and the hydrogen, a hydrogen storage material tank for storing the separated hydrogen storage material after
the hydrogenation, a selection unit for selecting the electrolysis cell to which the electric power is supplied in accordance with fluctuation of electric power supplied to the electrolysis cell, a first heat control unit for holding a temperature of the electrolysis cell at a predetermined temperature by using a heater provided in the reaction vessel, a first flow rate control unit for adjusting a flow rate of the water to be supplied to the steam generator and holding a flow rate of the steam to be inputted into the electrolysis cell constant, and a second flow rate control unit for adjusting a flow rate of the hydrogen storage material to be supplied in accordance with fluctuation of the electric power.

### Advantages of the Invention

According to the embodiment of the present invention, even if the electric power to be supplied to the electrolysis cell is fluctuated, a hydrogen production technique by using high temperature steam electrolysis capable of realizing high hydrogen manufacture efficiency and stable operation control is provided.

### Brief Description of Drawings

Fig. 1 is a constitution diagram of a hydrogen production system using high temperature steam electrolysis according to a first embodiment;
Figs. 2 are views illustrating a change of an output of each control parameter with a change of a power supply output;
Fig. 3 is a constitution diagram of a hydrogen production system using high temperature steam electrolysis according to a second embodiment; and
Fig. 4 is a constitution diagram of a hydrogen production system using high temperature steam electrolysis according to a third embodiment.

### Description of Embodiments

### (First Embodiment)

This embodiment will be described below by referring to the attached drawings.

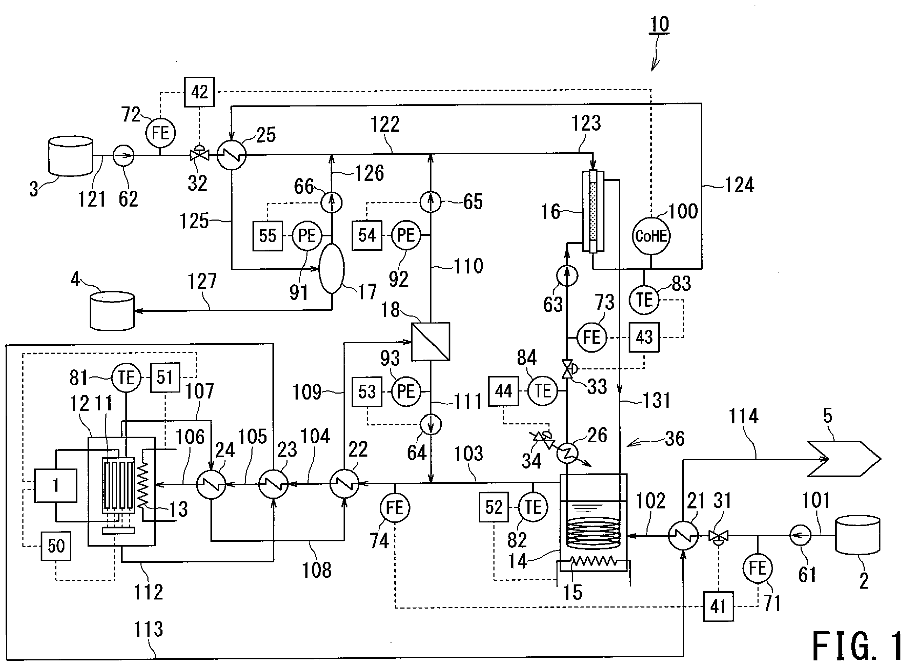

As illustrated in Fig. 1, a hydrogen production system 10 by using high temperature steam electrolysis according to the first embodiment (hereinafter abbreviated as hydrogen production system 10) includes a plurality of electrolysis cells 11 provided inside a reaction vessel 12 and performing high temperature steam electrolysis by receiving an input of high temperature steam generated in a steam generator 14, a water separator 18 for receiving an input of a mixture of the steam and hydrogen generated by the high temperature steam electrolysis outputted from the electrolysis cell 11 and separating it to the steam and the hydrogen, a hydrogenation reactor 16 for receiving an input of a mixture of a supplied hydrogen storage material and the separated hydrogen and hydrogenating the hydrogen storage material, a heat medium loop 36 for transmitting heat energy generated when the hydrogen storage material is hydrogenated to water to be supplied into the steam generator 14 through a circulating heat medium, a gas/liquid separator 17 for receiving an input of a mixture of the hydrogen storage material after hydrogenation and the hydrogen and separating it to the hydrogen storage material after hydrogenation and the hydrogen outputted from the hydrogenation reactor 16, a hydrogen storage material tank 4 for storing the separated hydrogen storage material after the hydrogenation, a selection unit 50 for selecting the electrolysis cell 11 to which the electric power is supplied in accordance with fluctuation of electric power supplied to the electrolysis cell 11, a first heat control unit 51 for holding a temperature of the electrolysis cell 11 at a predetermined temperature by using a heater 13 provided inside the reaction vessel 12, a first flow rate control unit 41 for adjusting a flow rate of the water to be supplied to the steam generator 14 and holding a flow rate of the high temperature steam to be inputted into the electrolysis cell 11 constant, and a second flow rate control unit 42 for adjusting a flow rate of the hydrogen storage material to be supplied in accordance with fluctuation of the electric power.

A water tank 2 stores raw material water 101 to be decomposed to hydrogen and oxygen by high temperature steam electrolysis. The raw material water 101 is suctioned by a pump 61 and supplied to the steam generator 14 through a heat exchanger 21.

The raw material water 101 supplied to the steam generator 14 is heated, converted to steam and outputted. A temperature of steam 103 outputted from the steam generator 14 is raised to a set temperature required for high temperature steam electrolysis through heat exchangers 22, 23, and 24. Temperature-raised steam 106 is supplied to the electrolysis cell 11 provided inside the reaction vessel 12.

The electrolysis cells 11 are arranged around a solid oxide electrolyte (not shown) and a hydrogen electrode and an oxygen electrode are formed on both sides thereof. In Fig. 1, the electrolysis cells 11 are constituted in four, but the number is not limited to this constitution, and the electrolysis cells 11 also include an electrolysis cell stack formed having a stack shape by stacking the cells.

Each of the electrolysis cells 11 is connected to a renewable power supply 1 and to which an electrolytic voltage is supplied. The renewable power supply 1 indicates a power source using renewable energy such as wind power, hydro power, solar power and the like.

The electrolysis cell 11 receives supply of electric power from the renewable power supply 1 and decomposes/generates supplied steam 106 into hydrogen and oxygen. A mixture 107 of steam and hydrogen is outputted from the hydrogen electrode into which the steam has been introduced, while oxygen 112 is outputted from the oxygen electrode.

The selection unit 50 monitors supplied power of the renewable power supply 1 and selects the electrolysis cell 11 to be connected to the renewable power supply 1 in accordance with fluctuation of the supplied power.

Specifically, a number of connections of the electrolysis cells 11 is determined so as to be proportional to the supplied power of the renewable power supply 1, and the electrolysis cells 11 corresponding to the number of connections are connected to the renewable power supply 1. The selection unit 50 sets the electrolysis cells 11 to be connected to the renewable power supply 1 corresponding to the number of connection of the electrolysis cells 11 in advance. As a result, an appropriate number of electrolysis cells 11 corresponding to the supplied power from the renewable power supply 1 are operated.

The heater 13 is provided inside the reaction vessel 12 and heats the electrolysis cell 11.

In the first heat control unit 51, a temperature of the electrolysis cell 11 is inputted from a thermometer 81 and is monitored. The first heat control unit 51 makes temperature control by using the heater 13 so that a temperature of the electrolysis cell 11 becomes a predetermined temperature (temperature at which the electrolysis cell 11 exerts its performances).

If the supplied power of the renewable power supply 1 is reduced, the electrolysis cell 11 to be connected to the renewable power supply 1 is selected by the selection unit 50, and operating electrolysis cells 11 are reduced. In this case, since a heat generation amount generated by electrolysis reaction is reduced, the temperature of the electrolysis cell 11 lowers.

By holding the temperature of the electrolysis cell 11 at a predetermined temperature by using a heat input from the heater 13 through an operation of the first heat control unit 51, even if the supplied power of the renewable power supply 1 is reduced, the electrolysis cell 11 can be operated stably.

The first heat control unit 51 may be constituted such that it monitors fluctuation of the electric power in the renewable power supply 1, calculates a heat amount required in accordance with the fluctuation of the electric power and holds the temperature of the electrolysis cell 11 at a predetermined temperature by the heater 13 on the basis of this calculated heat amount.

In the first flow rate control unit 41, a flow rate of steam on an output side of the steam generator 14 is inputted from a flowmeter 74 and is monitored. Then, it adjusts a supply amount of water supplied from the water tank 2 to the steam generator 14 by using a flow control valve 31 and holds a flow rate of steam on the output side of the steam generator 14 constant.

Since the electrolysis cell 11 is operating in a high temperature state, constant supply of a steam amount is preferable from a viewpoint of stable operation. If the supplied power of the renewable power supply 1 is fluctuated, the steam amount used for electrolysis reaction in the electrolysis cell 11 is also fluctuated in accordance with that. If the supplied steam amount is fluctuated in accordance with the fluctuation of the steam amount in use, there is a concern that the electrolysis cell 11 cannot be operated stably.

Even if the supplied power of the renewable power supply 1 is fluctuated, the electrolysis cell 11 can be operated stably by holding the steam amount to be inputted into the electrolysis cell 11 constant by an operation of the first flow rate control unit 41.

The mixture 107 of steam and hydrogen outputted from the hydrogen electrode of the electrolysis cell 11 performs heat exchange with steam supplied to the electrolysis cell 11 in the heat exchangers 24 and 25. Then, a mixture 109 of steam and hydrogen is inputted into the water separator 18. On the other hand, oxygen 113 outputted from the oxygen electrode of the electrolysis cell 11 performs heat exchange with the raw material water 101 in the heat exchanger 21 and is discharged from an oxygen outlet 5.

The water separator 18 separates the inputted mixture 109 of steam and hydrogen into steam and hydrogen. A temperature of the mixture 109 of hydrogen and steam after being outputted from the heat exchanger 22 is approximately 150°C. Under this temperature condition, as a specific constitution of the water separator 18, a separator using a pressure swing adsorption (PSA) method in which adsorption and desorption of moisture are repeated alternately in an adsorption tower filled with a molecular sieve can be considered.

Moreover, by removing moisture by applying a palladium film or a silica film to the water separator 18, the water separator 18 can be installed close to the output side of the electrolysis cell 11 at a position where the mixture of hydrogen and steam is at a higher temperature (close to an output of the heat exchanger 24, for example).

Then, the water separator 18 merges steam separated from the water separator 18 to a position where the temperature is closest on a supply line of steam inputted into the electrolysis cell 11. As a result, the steam can be merged with steam inputted into the electrolysis cell 11 efficiently without lowering a temperature of separated steam.

Steam 111 separated from the water separator 18 is merged with steam 103 outputted from the steam generator 14 by suctioning of a compressor 64.

In a control unit 53, an outlet pressure (steam output side) of the water separator 18 is inputted from a pressure meter 93 and is monitored. Then, the control unit adjusts the compressor 64 so that this outlet pressure is held at a set pressure value.

On the other hand, hydrogen 110 separated by the water separator 18 is merged with a supply line through which a hydrogen storage material (toluene) is supplied to the hydrogenation reactor 16 by suctioning of the compressor 65.

In a control unit 54, an outlet pressure (hydrogen output side) of the water separator 18 is inputted from a pressure meter 92 and is monitored. Then, the control unit adjusts the compressor 65 so that this outlet pressure is held at a set pressure value.

By using the compressors 64 and 65, each of steam and hydrogen can be stably supplied to a system higher than a pressure of the water separator 18.

A hydrogen storage material tank 3 stores a hydrogen storage material for hydrogenation. Here, use of toluene as the hydrogen storage material will be described. As the hydrogen storage material, unsaturated hydrocarbon such as benzene, naphthalene and the like can be also applied.

Toluene 121 stored in the hydrogen storage material tank 3 is suctioned by a pump 62 and merged and mixed with hydrogen separated in the water separator 18. Then, a mixture 123 of toluene and hydrogen is inputted into the hydrogenation reactor 16.

The hydrogenation reactor 16 is filled with a catalyst suitable for hydrogenation reaction. In the hydrogenation reactor 16, hydrogenation reaction is conducted by inputted toluene and hydrogen, hydrogen is added to toluene, and methyl cyclohexane (MCH) is generated. Then, a mixture 124 of MCH and hydrogen is outputted from the hydrogenation reactor 16. Then, the mixture 124 of MCH and hydrogen is heat-exchanged with the toluene 121 in the heat exchanger 25 and inputted into the gas/liquid separator 17.

In the second flow rate control unit 42, a concentration of hydrogen on the output side of the hydrogenation reactor 16 is inputted from a hydrogen concentration meter 100 and is monitored. Then, the second flow rate control unit adjusts a flow rate of toluene by using a flow control valve 32 and holds a hydrogen concentration on the output side of the hydrogenation reactor 16 constant.

If the supplied power of the renewable power supply 1 lowers, a hydrogen amount manufactured in the electrolysis cell 11 lowers. If a flow rate of toluene is constant, a ratio of hydrogen to toluene is changed, whereby a reaction rate and a selection rate are affected, and there is a concern that reaction heat might be fluctuated.

If a supply amount of toluene is constant while the hydrogen amount lowers, there is a concern that unreacted toluene is generated in the hydrogenation reactor 16. Since separation of MCH and toluene from each other becomes difficult, an output in the hydrogenation reactor 16 needs to be a mixture of MCH and unreacted hydrogen.

By adjusting a supply flow-rate of toluene so that the concentration of hydrogen outputted from the hydrogenation reactor 16 is held constant by an operation of the second flow rate control unit 42, a ratio of hydrogen to toluene is maintained, and hydrogenation reaction can be conducted stably. Moreover, generation of unreacted toluene can be suppressed.

It is needless to say that a point that hydrogen is monitored at an outlet of the hydrogenation reactor 16 so that toluene should not remain can be also applied to supply of constant power.

In the hydrogenation reactor 16, heat energy is generated by hydrogenation reaction of toluene.

The heat medium loop 36 forms a loop through which a heat medium 131 circulates via the hydrogenation reactor 16 and the steam generator 14. The heat medium is circulated by a compressor 63. The circulating heat medium transmits heat energy generated by hydrogenation reaction of toluene to water stored in the steam generator 14 and converts it to steam.

A cooler 26 is provided on a heat medium input side of the hydrogenation reactor 16 on the heat medium loop 36 and cools the circulating heat medium by a refrigerant.

In a refrigerant flow rate control unit 44, a temperature of the heat medium circulating through the heat medium loop 36 is inputted from a thermometer 84 and is monitored. Then, when this temperature is fluctuated, a flow rate of the refrigerant poured into the cooler 26 is adjusted by using a flow control valve 34, and a temperature of the heat medium is held constant.

By holding the temperature of the heat medium constant by the refrigerant flow rate control unit 44, toluene and hydrogen reacted in the hydrogenation reactor 16 can be reacted under a same temperatures condition.

In a heat medium flow rate control unit 43, a temperature on the output side of the hydrogenation reactor 16 is inputted from a thermometer 83 and is monitored. Then, when this temperature drops, a flow rate of the heat medium is adjusted (reduced) by using a flowmeter 73 and a flow control valve 33 provided on the heat medium loop 36 so as to hold the temperature on the output side of the hydrogenation reactor 16 at a set temperature or more.

If a hydrogen flow rate inputted into the hydrogenation reactor 16 lowers, heat energy by the hydrogenation reaction lowers. At this time, if the flow rate of the heat medium is made constant and a moving amount of heat energy to the heat medium is constant, a temperature on the output side of the hydrogenation reactor 16 lowers.

By reducing the flow rate of the heat medium and by reducing the moving amount of heat energy to the heat medium by an operation of the heat medium flow rate control unit 43, a temperature drop on the output side of the hydrogenation reactor 16 is suppressed. Thus, heat exchange between the mixture 124 of MCH and hydrogen and the toluene 121 supplied from the hydrogen storage material tank 3 can be performed appropriately. As a result, an input of the toluene 121 in a liquid state into the hydrogenation reactor 16 can be prevented.

In an auxiliary heater control unit 52, a temperature of the steam 103 outputted from the steam generator 14 is inputted from a thermometer 82 and is monitored. Then, temperature control is executed by using an auxiliary heater 15 provided in the steam generator 14 so that a temperature of steam outputted from the steam generator 14 becomes a set value or more.

Since a heat input into the steam generator 14 is assisted by the auxiliary heater control unit 52, a temperature of steam outputted from the steam generator 14 is held at a set value or more.

The mixture 124 of MCH and hydrogen outputted from the hydrogenation reactor 16 is heat-exchanged with the toluene 121 in the heat exchanger 25 and is inputted into the gas/liquid separator 17.

In the gas/liquid separator 17, the mixture 125 of MCH and hydrogen is inputted, and MCH and hydrogen are separated from each other. Hydrogen 126 separated by the gas/liquid separator 17 is merged with toluene supplied from the hydrogen storage material tank 3 by suctioning of a compressor 66 and becomes a mixture 122 of toluene and hydrogen.

In a control unit 55, an outlet pressure (hydrogen output side) of the gas/liquid separator 17 is inputted from a pressure meter 91 and is monitored. The compressor 66 is adjusted so that the outlet pressure is held at a set value. By using the compressor 66, hydrogen can be supplied stably to a system higher than a pressure of the gas/liquid separator 17.

On the other hand, the separated MCH is stored in the hydrogen storage material tank 4.

Here, an operation of each control parameter if the power supplied from the renewable power supply 1 is fluctuated will be described specifically.

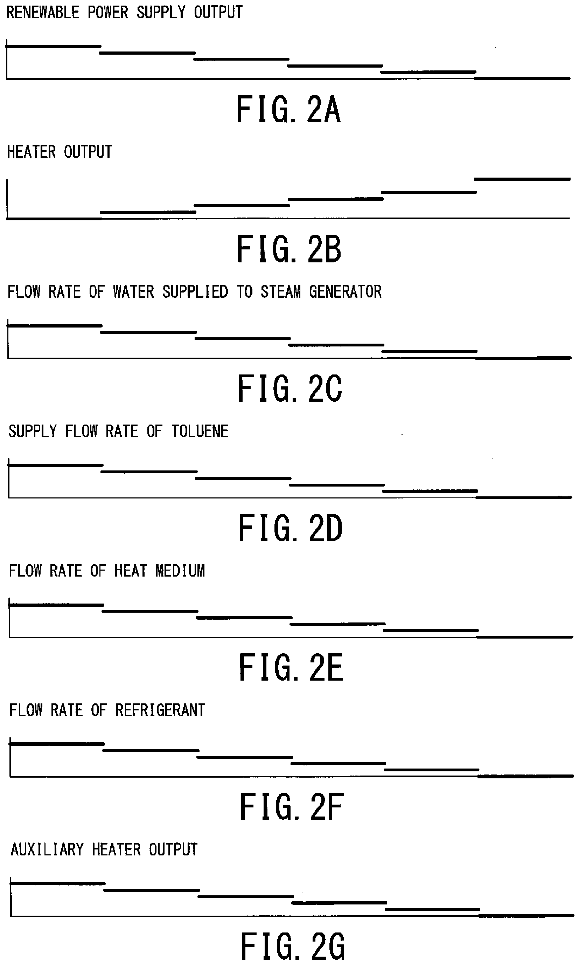

Figs. 2 are diagrams for explaining an operation of each control parameter if the power supplied from the renewable power supply 1 is reduced (see Fig. 1 as appropriate). Fig. 2A illustrates a state in which the power supplied from the renewable power supply 1 is sequentially reduced.

First, the selection unit 50 monitors the supplied power of the renewable power supply 1, selects the electrolysis cell 11 connected to the renewable power supply 1 in accordance with the reduction of the supplied power and reduces the connection number.

Since the temperature of the electrolysis cell 11 drops with the reduction of the operating electrolysis cells 11, the first heat control unit 51 increases a heat input from the heater 13 (Fig. 2B) and holds the electrolysis cell 11 at a predetermined temperature.

If the supplied power from the renewable power supply 1 is reduced, a steam amount used for electrolysis reaction in the electrolysis cell 11 lowers.

The first flow rate control unit 41 reduces a supply amount of water supplied from the water tank 2 to the steam generator 14 by using a flowmeter 71 and the flow control valve 31 (Fig. 2C) and holds a flow rate of the steam on the output side of the steam generator 14 constant.

If the supplied power from the renewable power supply 1 is reduced, a steam reaction amount in high temperature steam electrolysis lowers and thus, a hydrogen flow rate supplied to the hydrogenation reactor 16 is reduced.

The second flow rate control unit 42 holds the concentration of hydrogen outputted from the hydrogenation reactor 16 constant by reducing a supply flow rate of toluene (Fig. 2D).

If the supplied power from the renewable power supply 1 is reduced, since flow rates of hydrogen and toluene to be supplied to the hydrogenation reactor 16 are reduced, generated reaction heat is reduced.

The heat medium flow rate control unit 43 reduces the moving amount of heat energy to the heat medium by reducing the flow rate of the heat medium (Fig. 2E) and suppresses temperature drop on the output side of the hydrogenation reactor 16.

If the supplied power from the renewable power supply 1 is reduced, the flow rates of hydrogen and toluene supplied to the hydrogenation reactor 16 are reduced, and generated reaction heat is reduced.

The refrigerant flow rate control unit 44 causes the toluene and hydrogen reacted in the hydrogenation reactor 16 to be reacted under the same temperature condition by reducing the flow rate of the refrigerant (Fig. 2F).

If the supplied power from the renewable power supply 1 is reduced, a supply water amount to the steam generator 14 is reduced.

The auxiliary heater control unit 52 holds a temperature of steam outputted from the steam generator 14 at a set temperature or more by reducing a heat input amount into the steam generator 14 (Fig. 2G).

As described above, by selecting the electrolysis cell 11 to be operated in accordance with power fluctuation of the renewable power supply 1 and by adjusting the temperature of the electrolysis cell 11 and flow rates of high temperature steam and the hydrogen storage material appropriately, stable operation control can be realized even if the renewable power supply in which power fluctuation occurs is used.

Moreover, by separating hydrogen and excessive steam outputted from the electrolysis cell 11 from each other, by returning the steam to a supply side of the electrolysis cell 11, and by providing the hydrogen to hydrogenation reaction with toluene, high hydrogen manufacture efficiency can be realized.

In the aforementioned embodiment, the renewable power supply 1 is described as a power supply, but it is needless to say that a normal constant-voltage power supply can be also used.

### (Second Embodiment)

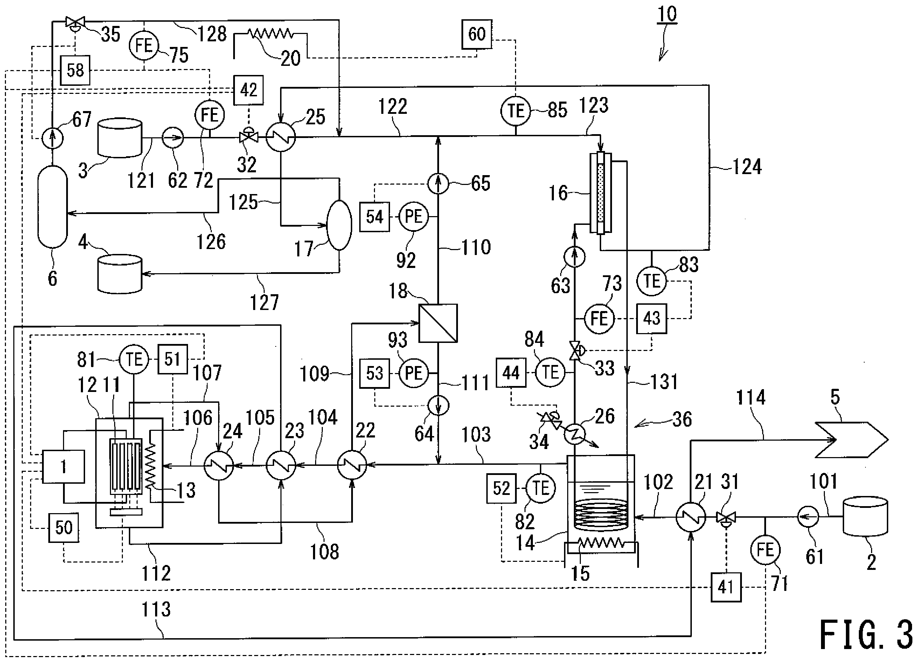

Fig. 3 illustrates a constitution diagram of the hydrogen production system 10 according to a second embodiment. Same reference numerals are given to constitutions and portions corresponding to those in the first embodiment and duplicated explanation will be omitted.

A difference in the second embodiment from the hydrogen production system 10 according to the first embodiment is that a hydrogen storage tank 6 for storing hydrogen separated in the gas/liquid separator 17 and a hydrogen flow rate control unit 58 for holding a space speed in the hydrogenation reactor 16 constant by adjusting an inflow amount to allow hydrogen stored in the hydrogen storage tank 6 to flow into the hydrogenation reactor 16 are further provided.

The hydrogen storage tank 6 stores the hydrogen 126 separated by the gas/liquid separator 17. The stored hydrogen is suctioned by a compressor 67 and merged with a supply line through which toluene is supplied from the hydrogen storage material tank 3 to the hydrogenation reactor 16. Then, it is mixed with toluene and is made to flow into the hydrogenation reactor 16.

In the hydrogen flow rate control unit 58, a flow rate of steam on an output side of the steam generator 14 from the flowmeter 71 and a flow rate of toluene supplied from a flowmeter 72 are inputted and monitored.

Then, a hydrogen amount to be manufactured in the electrolysis cell 11 is estimated from the flow rate of the steam and the space speed in the hydrogenation reactor 16 is acquired from this hydrogen amount and the flow rate of toluene. The space speed means a speed obtained by dividing a total of supply flow rate in the hydrogenation reactor 16 by a filled volume of a catalyst in the hydrogenation reactor 16.

Then, the hydrogen flow rate control unit 58 adjusts a supply amount to be made to flow from the hydrogen storage tank 6 into the hydrogenation reactor 16 by using a flowmeter 75 and a flow control valve 35 (or the compressor 67) and holds the space speed in the hydrogenation reactor 16 constant.

If the supplied power of the renewable power supply 1 is reduced, a manufactured amount of hydrogen in the electrolysis cell 11 is reduced, and a toluene supply flow rate to the hydrogenation reactor 16 is also reduced. As a result, the space speed in the hydrogenation reactor 16 is reduced and there is a concern that reaction efficiency of hydrogen and toluene in the hydrogenation reactor 16 is lowered.

By maintaining the space speed in the hydrogenation reactor 16 constant by the hydrogen flow rate control unit 58 by supplying hydrogen from the hydrogen storage tank 6, drop of the reaction efficiency of the hydrogen and toluene in the hydrogenation reactor 16 can be suppressed.

In a hydrogen heater control unit 60, an inlet temperature of the hydrogenation reactor 16 is inputted from a thermometer 85 and is monitored. Then, temperature adjustment is executed so that a temperature of inflow hydrogen becomes a set value or more by using the hydrogen heater 20 provided along an inflow line for inflow into the hydrogenation reactor 16.

The hydrogen stored in the hydrogen storage tank 6 is at a low temperature since it was obtained by heat exchange in the heat exchanger 25 but is made possible to flow into the hydrogenation reactor 16 after a temperature is raised by an operation of the hydrogen heater control unit 60.

Moreover, in Fig. 3, variations of control methods of the first flow rate control unit 41 and the second flow rate control unit 42 are illustrated, respectively.

The first flow rate control unit 41 monitors fluctuation of electric power in the renewable power supply 1 and forecasts a steam amount to be consumed in high temperature steam electrolysis in accordance with the fluctuation of electric power.

The supply amount of water to be supplied from the water tank 2 to the steam generator 14 is adjusted by using the flowmeter 71 and the flow control valve 31 so that a flow rate of steam made to flow into the electrolysis cell 11 is held constant on the basis of this forecast value.

The second flow rate control unit 42 monitors fluctuation of electric power in the renewable power supply 1 and a water supply flow rate to the steam generator 14 by using the flowmeter 71 and forecasts a steam amount to be consumed by high temperature steam electrolysis.

Hydrogen to be manufactured is calculated on the basis of this forecast steam amount, and a supply flow rate of toluene is adjusted by using the flowmeter 72 and the flow control valve 32 so as to match this hydrogen flow rate.

### (Third Embodiment)

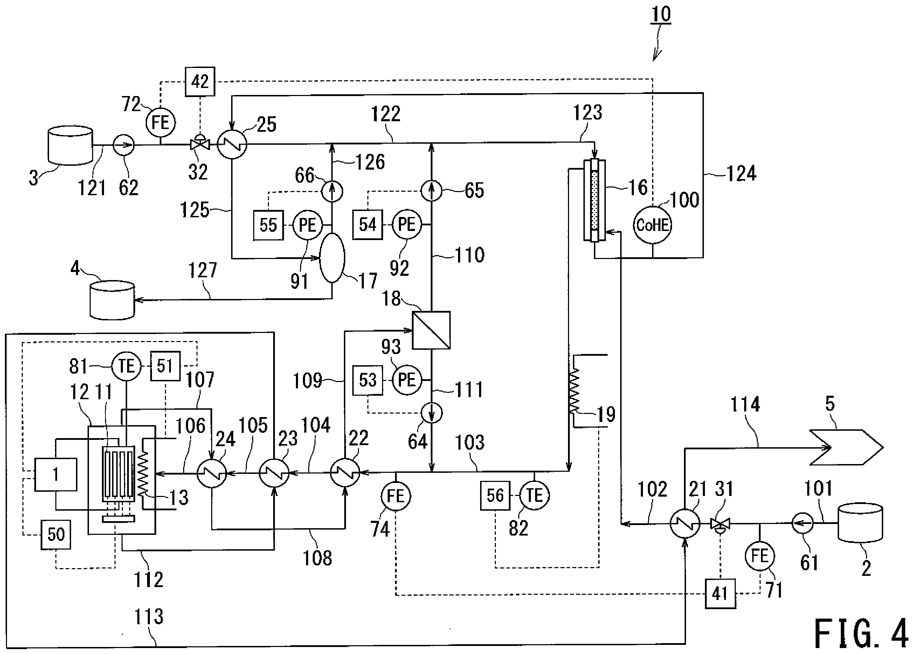

Fig. 4 illustrates a constitution diagram of the hydrogen production system 10 according to a third embodiment. Same reference numerals are given to constitutions and portions corresponding to those in the first embodiment and duplicated explanation will be omitted.

A difference in the third embodiment from the hydrogen production system 10 according to the first embodiment is that the hydrogenation reactor 16 and the steam generator 14 are integrated, and steam is generated in the hydrogenation reactor 16 to which water is supplied.

In the third embodiment, there is no supply of water to the steam generator 14 once so as to convert the water to steam (see Fig. 1) but water is supplied to the hydrogenation reactor 16 and directly converted to steam by hydrogenation reaction heat.

In a steam heater control unit 56, a temperature of the steam 103 outputted from the hydrogenation reactor 16 is inputted from the thermometer 82 and is monitored. Then, temperature adjustment is executed so that a temperature of steam outputted from the hydrogenation reactor 16 becomes a set temperature or more by using a steam heater 19 provided along a supply line of steam.

As described above, by integrating the hydrogenation reactor 16 and the steam generator 14, the entire apparatus can be constituted compactly.

According to the hydrogen production system of each embodiment described above, by selecting the electrolysis cell to be operated in accordance with fluctuation of electric power and by adjusting a temperature of the electrolysis cell and flow rates of the high temperature steam and the hydrogen storage material appropriately, stable operation control can be realized even if the renewable power supply in which electric power fluctuation occurs is used.

Some embodiments of the present invention are described but these embodiments are presented as examples and are not intended to limit a range of the invention.

### Reference Numerals

1 ...renewable power supply, 2 ...water tank, 3 ...hydrogen storage material tank (before hydrogen storage), 4 ...hydrogen storage material tank (after hydrogen storage), 5 ...oxygen outlet, 6 ...hydrogen storage tank, 10 ...hydrogen production system, 11 ...electrolysis cell, 12 ...reaction vessel, 13 ...heater, 14 ...steam generator, 15 ...auxiliary heater, 16 ...hydrogenating reactor, 17 ...gas/liquid separator, 18 ...water separator, 19 ...steam heater, 20 ...hydrogen heater, 21, 22, 23, 24, 25 ...heat exchanger, 26 ...cooler, 31, 32, 33, 34, 35 ...flow control valve, 36 ...heat medium loop, 41 ...first flow rate control unit, 42 ...second flow rate control unit, 43 ...heat medium flow-rate control unit, 44 ...refrigerant flow-rate control unit, 50...selection unit, 51...first temperature control unit, 52...auxiliary heater control unit, 53, 54, 55 ...control unit, 56...steam heater control unit, 58...hydrogen flow-rate control unit, 60...hydrogen heater control unit, 61, 62 ...pump, 63, 64, 65, 66, 67 ...compressor, 71, 72, 73, 74, 75 ...flowmeter, 81, 82, 83, 84, 85 ...thermometer, 91, 92, 93 ...pressure meter, 100 ...hydrogen concentration meter, 101, 102 ...water, 103, 104, 105, 106 ...steam, 107, 108, 109 ...mixture (hydrogen and steam), 110 ...hydrogen, 111 ...steam, 112, 113, 114 ...oxygen, 121 ...toluene, 122, 123, 114 ...mixture (toluene and hydrogen), 124, 125 ...mixture (MCH and hydrogen), 126 ...hydrogen, 127 ...MCH, 128 ...hydrogen, 131 ...heat medium

## Claims

1. A hydrogen production system by using high temperature steam electrolysis, comprising:
a plurality of electrolysis cells provided inside a reaction vessel and for performing high temperature steam electrolysis by receiving an input of steam generated in a steam generator;
a water separator for receiving an input of a mixture of steam and hydrogen generated by the high temperature steam electrolysis outputted from the electrolysis cell and for separating the mixture to the steam and the hydrogen;
a hydrogenation reactor for receiving an input of a mixture of a supplied hydrogen storage material and the separated hydrogen and for hydrogenating the hydrogen storage material:
a heat medium loop for transmitting heat energy generated when the hydrogen storage material is hydrogenated to water to be supplied into the steam generator through a circulating heat medium;
a gas/liquid separator for receiving an input of a mixture of the hydrogen storage material after hydrogenation and the hydrogen and for separating the mixture to the hydrogen storage material after hydrogenation and the hydrogen outputted from the hydrogenation reactor;
a hydrogen storage material tank for storing the separated hydrogen storage material after the hydrogenation;
a selection unit for selecting the electrolysis cell to which the electric power is supplied in accordance with fluctuation of electric power supplied to the electrolysis cell;
a first heat control unit for holding a temperature of the electrolysis cell at a predetermined temperature by using a heater provided in the reaction vessel;
a first flow rate control unit for adjusting a flow rate of the water to be supplied to the steam generator and holding a flow rate of the steam to be inputted into the electrolysis cell constant; and
a second flow rate control unit for adjusting a flow rate of the hydrogen storage material to be supplied in accordance with fluctuation of the electric power,
wherein the second flow rate control unit for adjusting the flow rate of the hydrogen storage material to be supplied is further suitable for holding a concentration of the hydrogen outputted from the hydrogenation reactor at a predetermined concentration.

2. The hydrogen production system by using high temperature steam electrolysis according to claim 1, further comprising:
an auxiliary heater control unit for adjusting a heating temperature of an auxiliary heater provided in the steam generator and making a temperature of the steam outputted from the steam generator be a set value or more.

3. The hydrogen production system by using high temperature steam electrolysis according to claim 1, further comprising:
a cooler provided on the heat medium loop and for cooling the heat medium by a refrigerant; and
a refrigerant flow rate control unit for adjusting a flow rate of the refrigerant flowing into the cooler and for holding a temperature of the circulating heat medium constant.

4. The hydrogen production system by using high temperature steam electrolysis according to claim 1, further comprising:
a heat medium flow rate control unit for adjusting a flow rate of the heat medium and for holding a temperature on an output side of the hydrogenation reactor at a set temperature or more.

5. The hydrogen production system by using high temperature steam electrolysis according to claim 1, further comprising:
a hydrogen storage tank for storing the hydrogen separated in the gas/liquid separator; and
a hydrogen flow rate control unit for adjusting an inflow amount to allow the hydrogen stored in the hydrogen storage tank to flow into the hydrogenation reactor and for holding a space speed flowing through the hydrogenation reactor constant.

6. The hydrogen production system by using high temperature steam electrolysis according to claim 5, further comprising:
a hydrogen heater control unit for adjusting a heating temperature of a hydrogen heater provided along an inflow line through which the hydrogen stored in the hydrogen storage tank is made to flow into the hydrogenation reactor and for making a temperature of the hydrogen to be made to flow into the hydrogenation reactor from the hydrogen storage tank be a set value or more.

7. The hydrogen production system by using high temperature steam electrolysis according to claim 1, wherein
the hydrogenation reactor and the steam generator are integrated and the hydrogenation reactor to which water is suppliable is suitable for generating steam therein.

8. The hydrogen production system by using high temperature steam electrolysis according to claim 1, wherein
the hydrogen storage material is unsaturated hydrocarbon.

9. The hydrogen production system by using high temperature steam electrolysis according to claim 1, wherein
the steam separated by the water separator is mergeable with the steam inputted into the electrolysis cell.

10. The hydrogen production system by using high temperature steam electrolysis according to claim 1, wherein
the steam separated by the water separator is mergeable at a position where a temperature is closest on a supply line of the steam to be inputted into the electrolysis cell.

11. A method for producing hydrogen by using high temperature steam electrolysis comprising steps of:
inputting steam generated in a steam generator and performing high temperature steam electrolysis using a plurality of electrolysis cells provided inside a reaction vessel;
inputting a mixture of the steam and hydrogen generated by the high temperature steam electrolysis outputted from the electrolysis cell and separating the mixture to the steam and the hydrogen;
inputting a mixture of a supplied hydrogen storage material and the separated hydrogen and hydrogenating the hydrogen storage material in a hydrogenation reactor:
transmitting heat energy generated when the hydrogen storage material is hydrogenated to water to be supplied into the steam generator through a circulating heat medium;
inputting a mixture of the hydrogen storage material after hydrogenation and the hydrogen and separating the mixture to the hydrogen storage material after hydrogenation and the hydrogen outputted from the hydrogenation reactor;
storing the separated hydrogen storage material after the hydrogenation;
selecting the electrolysis cell to which the electric power is supplied in accordance with fluctuation of electric power supplied to the electrolysis cell;
holding a temperature of the electrolysis cell at a predetermined temperature by using a heater provided in the reaction vessel;
adjusting a flow rate of the water to be supplied to the steam generator and holding a flow rate of the steam to be inputted into the electrolysis cell constant; and
adjusting a flow rate of the hydrogen storage material to be supplied in accordance with fluctuation of the electric power and holding a concentration of the hydrogen outputted from the hydrogenation reactor at a predetermined concentration.

## Patentansprüche

1. Wasserstoffproduktionssystem unter Verwendung von Hochtemperatur-Dampfelektrolyse, welches Folgendes beinhaltet:
eine Vielzahl von Elektrolysezellen, welche innerhalb eines Reaktionsgefäßes bereitgestellt sind zum Durchführen von Hochtemperatur-Dampfelektrolyse durch Aufnehmen eines Eintrags von in einem Dampferzeuger erzeugtem Dampf;
einen Wasserabscheider zum Aufnehmen eines Eintrags aus einer Mischung aus Dampf und Wasserstoff, welcher durch die Hochtemperatur-Dampfelektrolyse erzeugt wird, welcher aus der Elektrolysezelle ausgestoßen wird, und zum Trennen der Mischung in den Dampf und den Wasserstoff;
einen Hydrierreaktor zum Aufnehmen eines Eintrags aus einer Mischung aus einem zugeführten Wasserstoff-Speichermaterial und dem getrennten Wasserstoff und zum Hydrieren des Wasserstoff-Speichermaterials:
eine Wärmemediumschleife zum Übertragen von Wärmeenergie, welche erzeugt wird, wenn das Wasserstoff-Speichermaterial zu Wasser hydriert wird, um an den Dampferzeuger durch ein zirkulierendes Wärmemedium abgegeben zu werden;
einen Gas-/Flüssigkeitsabscheider zum Aufnehmen eines Eintrags aus einer Mischung aus dem Wasserstoff-Speichermaterial nach Hydrierung und dem Wasserstoff und zum Trennen der Mischung in das Wasserstoff-Speichermaterial nach Hydrierung und den aus dem Hydrierreaktor ausgestoßenen Wasserstoff;
einen Wasserstoff-Speichermaterialtank zum Speichern des getrennten Wasserstoff-Speichermaterials nach der Hydrierung;
eine Auswahleinheit zum Auswählen der Elektrolysezelle, an welche der elektrische Strom in Einklang mit einer Fluktuation des an die Elektrolysezelle abgegebenen elektrischen Stroms abgegeben wird;
eine erste Wärmesteuerungseinheit zum Halten einer Temperatur der Elektrolysezelle bei einer vorbestimmten Temperatur unter Verwendung eines Erhitzers, welcher in dem Reaktionsgefäß bereitgestellt ist;
eine erste Durchflussgeschwindigkeits-Steuerungseinheit zum Einstellen einer Durchflussgeschwindigkeit des an den Dampfgenerator abzugebenden Wassers und zum Konstanthalten einer Durchflussgeschwindigkeit des in die Elektrolysezelle einzutragenden Dampfs; und
eine zweite Durchflussgeschwindigkeits-Steuerungseinheit zum Einstellen einer Durchflussgeschwindigkeit des in Einklang mit einer Fluktuation des elektrischen Stroms abzugebenden Wasserstoff-Speichermaterials,
wobei die zweite Durchflussgeschwindigkeits-Steuerungseinheit zum Einstellen einer Durchflussgeschwindigkeit des abzugebenden Wasserstoff-Speichermaterials zudem geeignet ist, eine Konzentration des von dem Hydrierreaktor ausgestoßenen Wasserstoffs bei einer vorbestimmten Konzentration zu halten.

2. Wasserstoffproduktionssystem unter Verwendung von Hochtemperatur-Dampfelektrolyse nach Anspruch 1, zudem Folgendes beinhaltend:
eine Zusatzerhitzer-Steuerungseinheit zum Einstellen einer Heiztemperatur eines Zusatzerhitzers, welcher in dem Dampferzeuger bereitgestellt ist und Bringen einer Temperatur des aus dem Dampferzeuger ausgestoßenen Dampfs auf einen Sollwert oder darüber.

3. Wasserstoffproduktionssystem unter Verwendung von Hochtemperatur-Dampfelektrolyse nach Anspruch 1, zudem beinhaltend:
einen Kühler, der an der Wärmemediumschleife bereitgestellt ist zum Kühlen des Wärmemediums durch ein Kältemittel; und
eine Kältemittel-Durchflussgeschwindigkeits-Steuerungseinheit zum Einstellen einer Durchflussgeschwindigkeit des in den Kühler strömenden Kältemittels und zum Konstanthalten einer Temperatur des zirkulierenden Wärmemediums.

4. Wasserstoffproduktionssystem unter Verwendung von Hochtemperatur-Dampfelektrolyse nach Anspruch 1, zudem Folgendes beinhaltend:
eine Wärmemedium-Durchflussgeschwindigkeits-Steuerungseinheit zum Einstellen einer Durchflussgeschwindigkeit des Wärmemediums und zum Halten einer Temperatur an einer Ausstoßseite des Hydrierreaktors auf einem Temperatursollwert oder darüber.

5. Wasserstoffproduktionssystem unter Verwendung von Hochtemperatur-Dampfelektrolyse nach Anspruch 1, zudem Folgendes beinhaltend:
einen Wasserstoffspeichertank zum Speichern des in dem Gas-/Flüssigkeitsabscheider getrennten Wasserstoffs; und
eine Wasserstoff-Durchflussgeschwindigkeits-Steuerungseinheit zum Einstellen einer Einströmmenge, um den in dem Wasserstoffspeichertank gespeicherten Wasserstoff in die Lage zu versetzen, in den Hydrierreaktor zu strömen und zum Konstanthalten einer Raumgeschwindigkeit, welche durch den Hydrierreaktor strömt.

6. Wasserstoffproduktionssystem unter Verwendung von Hochtemperatur-Dampfelektrolyse nach Anspruch 5, zudem Folgendes beinhaltend:
eine Wasserstofferhitzer-Steuerungseinheit zum Einstellen einer Heiztemperatur eines Wasserstofferhitzers, welcher entlang einer Einströmleitung bereitgestellt ist, durch welche der in dem Wasserstoffspeichertank gespeicherte Wasserstoff in den Hydrierreaktor geströmt wird und zum Bringen einer Temperatur des aus dem Wasserstoffspeichertank in den Hydrierreaktor einzuströmenden Wasserstoffs auf einen Sollwert oder darüber.

7. Wasserstoffproduktionssystem unter Verwendung von Hochtemperatur-Dampfelektrolyse nach Anspruch 1, bei welchem:
der Hydrierreaktor und der Dampferzeuger integriert sind und der Hydrierreaktor, an welchen Wasser abgegeben werden kann, geeignet ist, um hierin Dampf zu erzeugen.

8. Wasserstoffproduktionssystem unter Verwendung von Hochtemperatur-Dampfelektrolyse nach Anspruch 1, bei welchem:
das Wasserstoff-Speichermaterial ein ungesättigter Kohlenwasserstoff ist.

9. Wasserstoffproduktionssystem unter Verwendung von Hochtemperatur-Dampfelektrolyse nach Anspruch 1, bei welchem der durch den Wasserabscheider getrennte Dampf mit dem Dampf zusammenführbar ist, welcher in die Elektrolysezelle eingetragen wird.

10. Wasserstoffproduktionssystem unter Verwendung von Hochtemperatur-Dampfelektrolyse nach Anspruch 1, bei welchem:
der durch den Wasserabscheider getrennte Dampf an einer Position zusammenführbar ist, an welcher eine Temperatur am nächsten an einer Zuführlinie des in die Elektrolysezelle einzutragenden Dampfs ist.

11. Verfahren zur Wasserstoffproduktion unter Verwendung von Hochtemperatur-Dampfelektrolyse, welches folgende Schritte beinhaltet:
Eintragen von in einem Dampferzeuger erzeugtem Dampf und Durchführen von Hochtemperatur-Dampfelektrolyse unter Verwendung einer Vielzahl von Elektrolysezellen, welche innerhalb eines Reaktionsgefäßes bereitgestellt sind;
Eintragen einer Mischung aus dem Dampf und aus Wasserstoff, welcher durch die Hochtemperatur-Dampfelektrolyse erzeugt wird, welcher aus der Elektrolysezelle ausgestoßen wird, und Trennen der Mischung in den Dampf und den Wasserstoff;
Eintrag einer Mischung aus einem zugeführten Wasserstoff-Speichermaterial und dem getrennten Wasserstoff und Hydrieren des Wasserstoff-Speichermaterials in einem Hydrierreaktor;
Übertragen von Wärmeenergie, welche erzeugt wird, wenn das Wasserstoff-Speichermaterial zu Wasser hydriert wird, um an den Dampferzeuger durch ein zirkulierendes Wärmemedium abgegeben zu werden;
Eintrag einer Mischung aus dem Wasserstoff-Speichermaterial nach Hydrierung und dem Wasserstoff und Trennen der Mischung in das Wasserstoff-Speichermaterial nach Hydrierung und den aus dem Hydrierreaktor ausgestoßenen Wasserstoff;
Speichern des getrennten Wasserstoff-Speichermaterials nach dem Hydrieren;
Auswählen der Elektrolysezelle, an welche der elektrische Strom in Einklang mit einer Fluktuation von an die Elektrolysezelle abgegebenem elektrischem Strom abgegeben wird;
Halten einer Temperatur der Elektrolysezelle bei einer vorbestimmten Temperatur unter Verwendung eines Erhitzers, welcher in dem Reaktionsgefäß bereitgestellt ist;
Einstellen einer Durchflussgeschwindigkeit des an den Dampfgenerator abzugebenden Wassers und Konstanthalten einer Durchflussgeschwindigkeit des in die Elektrolysezelle einzutragenden Dampfs; und
Einstellen einer Durchflussgeschwindigkeit des in Einklang mit einer Fluktuation des elektrischen Stroms abzugebenden Wasserstoff-Speichermaterials und Halten einer Konzentration des von dem Hydrierreaktor ausgestoßenen Wasserstoffs bei einer vorbestimmten Konzentration.

## Revendications

1. Système de production d'hydrogène au moyen d'une électrolyse de vapeur à haute température, comprenant :
une pluralité de cellules d'électrolyse prévues à l'intérieur d'un récipient de réaction et destinées à mener à bien une électrolyse de vapeur à haute température en recevant un apport de vapeur générée dans un générateur de vapeur ;
un séparateur d'eau destiné à recevoir un apport d'un mélange de vapeur et d'hydrogène généré par l'électrolyse de vapeur à haute température produite à partir de la cellule d'électrolyse et destiné à séparer le mélange en vapeur et en hydrogène ;
un réacteur d'hydrogénation destiné à recevoir un apport d'un mélange d'un matériau de stockage de l'hydrogène fourni et l'hydrogène séparé et destiné à hydrogéner le matériau de stockage de l'hydrogène ;
une boucle de milieu chauffant destinée à transmettre une énergie thermique générée lorsque le matériau de stockage de l'hydrogène est hydrogéné en eau à fournir dans le générateur de vapeur à travers un milieu chauffant circulant ;
un séparateur de gaz/liquide destiné à recevoir un apport d'un mélange du matériau de stockage de l'hydrogène après l'hydrogénation et l'hydrogène et destiné à séparer le mélange en matériau de stockage de l'hydrogène après l'hydrogénation et l'hydrogène produit à partir du réacteur d'hydrogénation ;
une cuve de matériau de stockage de l'hydrogène destinée à stocker le matériau de stockage de l'hydrogène séparé après l'hydrogénation ;
une unité de sélection destinée à sélectionner la cellule d'électrolyse à laquelle la puissance électrique est fournie conformément à la fluctuation de la puissance électrique fournie à la cellule d'électrolyse ;
une première unité de régulation de chaleur destinée à maintenir une température de la cellule d'électrolyse à une température prédéterminée au moyen d'un dispositif chauffant prévu dans le récipient de réaction ;
une première unité de régulation de débit destinée à ajuster un débit de l'eau à fournir au générateur de vapeur et à maintenir un débit de la vapeur à introduire dans la constante de cellule d'électrolyse ; et
une seconde unité de régulation de débit destinée à ajuster un débit du matériau de stockage de l'hydrogène à fournir conformément à la fluctuation de la puissance électrique,
dans lequel la seconde unité de régulation de débit destinée à ajuster le débit du matériau de stockage de l'hydrogène à fournir est en outre adéquate pour maintenir une concentration de l'hydrogène produit à partir du réacteur d'hydrogénation à une concentration prédéterminée.

2. Système de production d'hydrogène au moyen d'une électrolyse de vapeur à haute température selon la revendication 1, comprenant en outre :
une unité de commande de dispositif chauffant auxiliaire destinée à ajuster une température de chauffage d'un dispositif chauffant auxiliaire prévu dans le générateur de vapeur et à générer une température de la vapeur produite à partir du générateur de vapeur qui soit une valeur définie ou supérieure.

3. Système de production d'hydrogène au moyen d'une électrolyse de vapeur à haute température selon la revendication 1, comprenant en outre :
un dispositif refroidisseur prévu sur la boucle de milieu chauffant et destiné à refroidir le milieu chauffant par un réfrigérant ; et
une unité de régulation de débit de réfrigérant destinée à ajuster un débit du réfrigérant circulant dans le dispositif refroidisseur et destinée à maintenir une température constante du milieu chauffant circulant.

4. Système de production d'hydrogène au moyen d'une électrolyse de vapeur à haute température selon la revendication 1, comprenant en outre :
une unité de régulation de débit de milieu chauffant destinée à ajuster un débit du milieu chauffant et destinée à maintenir une température sur un côté sortie du réacteur d'hydrogénation à une température définie ou supérieure.

5. Système de production d'hydrogène au moyen d'une électrolyse de vapeur à haute température selon la revendication 1, comprenant en outre :
une cuve de stockage de l'hydrogène destinée à stocker l'hydrogène séparé dans le séparateur de gaz/liquide ; et
une unité de régulation de débit d'hydrogène destinée à ajuster une quantité d'admission pour permettre à l'hydrogène stocké dans la cuve de stockage de l'hydrogène de circuler dans le réacteur d'hydrogénation et destinée à maintenir une vitesse constante dans l'espace circulant à travers le réacteur d'hydrogénation.

6. Système de production d'hydrogène au moyen d'une électrolyse de vapeur à haute température selon la revendication 5, comprenant en outre :
une unité de commande de dispositif chauffant l'hydrogène destinée à ajuster une température de chauffage d'un dispositif chauffant l'hydrogène prévu le long d'une conduite d'admission à travers laquelle l'hydrogène stocké dans la cuve de stockage de l'hydrogène est amené à circuler dans le réacteur d'hydrogénation et destinée à générer une température de l'hydrogène à faire circuler dans le réacteur d'hydrogénation à partir de la cuve de stockage de l'hydrogène pour qu'elle soit à une valeur définie ou supérieure.

7. Système de production d'hydrogène au moyen d'une électrolyse de vapeur à haute température selon la revendication 1, dans lequel
le réacteur d'hydrogénation et le générateur de vapeur sont intégrés et le réacteur d'hydrogénation auquel de l'eau peut être fournie est adéquat pour générer de la vapeur à l'intérieur de celui-ci.

8. Système de production d'hydrogène au moyen d'une électrolyse de vapeur à haute température selon la revendication 1, dans lequel
le matériau de stockage de l'hydrogène est un hydrocarbure insaturé.

9. Système de production d'hydrogène au moyen d'une électrolyse de vapeur à haute température selon la revendication 1, dans lequel
la vapeur séparée par le séparateur d'eau peut fusionner avec la vapeur introduite dans la cellule d'électrolyse.

10. Système de production d'hydrogène au moyen d'une électrolyse de vapeur à haute température selon la revendication 1, dans lequel
la vapeur séparée par le séparateur d'eau peut fusionner au niveau d'une position où une température est la plus proche sur une chaîne d'approvisionnement en vapeur à introduire dans la cellule d'électrolyse.

11. Procédé destiné à produire de l'hydrogène au moyen d'une électrolyse de vapeur à haute température comprenant les étapes consistant à :
introduire de la vapeur générée dans un générateur de vapeur et mener à bien une électrolyse de vapeur à haute température au moyen d'une pluralité de cellules d'électrolyse prévues à l'intérieur d'un récipient de réaction ;
introduire un mélange de la vapeur et de l'hydrogène généré par l'électrolyse de vapeur à haute température produite à partir de la cellule d'électrolyse et séparer le mélange en vapeur et en hydrogène ;
introduire un mélange d'un matériau de stockage de l'hydrogène fourni et l'hydrogène séparé et hydrogéner le matériau de stockage de l'hydrogène dans un réacteur d'hydrogénation ;
transmettre l'énergie thermique générée, lorsque le matériau de stockage de l'hydrogène est hydrogéné en eau à fournir dans le générateur de vapeur à travers un milieu chauffant circulant ;
introduire un mélange du matériau de stockage de l'hydrogène après l'hydrogénation et l'hydrogène et séparer le mélange en matériau de stockage de l'hydrogène après l'hydrogénation et l'hydrogène produit à partir du réacteur d'hydrogénation ;
stocker le matériau de stockage de l'hydrogène séparé après l'hydrogénation ;
sélectionner la cellule d'électrolyse à laquelle la puissance électrique est fournie conformément à la fluctuation de la puissance électrique fournie à la cellule d'électrolyse ;
maintenir une température de la cellule d'électrolyse à une température prédéterminée au moyen d'un dispositif chauffant prévu dans le récipient de réaction ;
ajuster un débit de l'eau à fournir au générateur de vapeur et maintenir un débit constant de la vapeur à introduire dans la cellule d'électrolyse ; et
ajuster un débit du matériau de stockage de l'hydrogène à fournir conformément à la fluctuation de la puissance électrique et maintenir une concentration de l'hydrogène produit à partir du réacteur d'hydrogénation à une concentration prédéterminée.
